# EUROPEAN PATENT APPLICATION

(11) **EP 4 764 870 A1**
(43) Date of publication of application: **24.06.2026**
(21) Application number: 25217480.0
(22) Date of filing: 20.11.2025
(51) Int. Cl.: G06F 11/3668

(54) **METHOD AND SYSTEM FOR DETERMINING ONE OR MORE FRONTIER BRANCHES DURING SOFTWARE TESTING**

(30) Priority: 19.12.2024 IN 202441100818
(71) Applicant: Hitachi, Ltd., Tokyo 100-8280 (JP)
(72) Inventor: MUKHERJEE, Subhojeet, 560055 Bangalore (IN)
(74) Representative: Mewburn Ellis LLP

(57) **Abstract**

The present disclosure relates to field of software testing that discloses method and system for determining frontier branches during software testing. System receives branch of software code under test from fuzzer. Further, system determines status of each of two end-points to be "processed" or "not-processed" based on corresponding key information. Thereafter, based on determination of status of each of two end points, system performs predefined operations for end-points whose status is determined to be not-processed, and for end-points whose status is determined to be processed. Furthermore, system determines status of at least one of, child blocks of second end-point based on basic block information of second end-point and sibling blocks of second end-point based on basic block information of first end-point. Finally, system determines frontier branches based on determined status of at least one of, child blocks and sibling blocks. The present disclosure helps in reducing time consumed for testing.

## Description

### TECHNICAL FIELD

The present disclosure relates to the field of software testing. Particularly, the present disclosure relates to a method and system for determining one or more frontier branches during software testing.

### BACKGROUND

In the software industry, pre-release testing is performed to ensure software's integrity, focusing especially on evaluating security and non-functional risks after the software has been compiled. The software testing is performed using a software testing tool. Fuzz testing, also referred as fuzzing, is a method of software testing that involves generating automated inputs to a program/software under test, and logging and observing unusual/anomalous behaviors in response to such inputs. In some instances, inputs to the program/software under test may be guided by a tester. The fuzzer is required to run all branches of the machine code to detect any such unusual/anomalous behaviors. Occasionally, a fuzzer might not succeed in generating specific inputs that satisfy specific branch blocks (conditions) or may generate inputs that get trapped in code sections preceding specific branches because of factors external to the software's context. This leads to a scenario where specific branches of the software code under test are not executed despite varied inputs used for testing and such branches which are not executed are referred to as frontier branches and an end block of a frontier branch is henceforth referred to as a frontier block. When the frontier branches remain unexecuted for a longer duration, the frontier branches may be blocking a significant part of the code of the software under test and the frontier branches that remain for longer duration are referred to as roadblocks. Generally, it is difficult for a tester to identify and prioritize frontier branches/roadblocks from large code size and large input domain and also in instances when source code is not available. Further, if the frontier branches/roadblocks are not identified in real-time, the tester cannot enable the fuzzer to execute the frontier branches/roadblocks by providing a specific input suitable for executing the frontier branches/roadblocks. Conventional/existing systems perform multiple re-executions of the software under test to execute the frontier branches which may require significant amount of processing and increases the software testing time, which in turn makes the conventional testing an expensive operation. The unsuccessful attempts of re-execution operation reduces efficiency of testing operation. Also, the conventional systems lack prioritizing measures for large number of frontier branches. Further, the conventional systems fail to identify all the frontier branches when the testing gets stuck after execution of an unconditional branch in the software. Therefore, there is a need to determine frontier branches during software testing in real-time.

The information disclosed in this background of the disclosure section is only for enhancement of understanding of the general background of the invention and should not be taken as an acknowledgement or any form of suggestion that this information forms the prior art already known to a person skilled in the art.

### SUMMARY

Disclosed herein is a method of determining one or more frontier branches during software testing. The method comprises receiving, by a processing system, a branch of a software code under test from a fuzzer associated with the processing system. The branch comprises key information associated with each of its two end-points characterized as first end-point and second end-point. The key information comprises address of the end-point, a first list position indicative of location of file information related to the end-point in a first list of a look-up database and a second list position indicative of location of a basic block information related to the end-point in a second list of the look-up database. Further, the method comprises determining status of each of the two end-points to be "processed" or "not-processed" based on the corresponding key information. Thereafter, based on the determination of the status of each of the two end points, the method comprises performing one of, for the end-points whose status is determined to be not-processed, determining from the look-up database for the end-points, the first list position and the second list position of the end-points and retrieving basic block information related to the end-points using the determined first list position and the determined second list position. For the end-points whose status is determined to be "processed", the method comprises retrieving basic block information of the end-points using updated location information of the end-point in the first list position and updated location information of the basic block information of the end-point in the second list position in the key information of the end-points. Furthermore, the method comprises determining status of at least one of, one or more child blocks of the second end-point based on the basic block information of the second end-point and one or more sibling blocks of the second end-point based on the basic block information of the first end-point. Finally, the method comprises determining one or more frontier branches based on the determined status of the at least one of, the one or more child blocks and the one or more sibling blocks.

Further, disclosed herein is a processing system for determining one or more frontier branches during software testing. The processing system comprises a processor and a memory. The memory is communicatively coupled to the processor and stores processor-executable instructions, which on execution, cause the processor to receive a branch of a software code under test from a fuzzer associated with the processing system. The branch comprises key information associated with each of its two end-points characterized as first end-point and second end-point. The key information comprises address of the end-point, a first list position indicative of location of file information related to the end-point in a first list of a look-up database and a second list position indicative of location of a basic block information related to the end-point in a second list of the look-up database. Further, the processor determines status of each of the two end-points to be "processed" or "not-processed" based on the corresponding key information. Thereafter, based on the determination of the status of each of the two end points, the processor performs one of, for the end-points whose status is determined to be not-processed, the processor determines from the look-up database for the end-points, the first list position and the second list position of the end-points and retrieving basic block information related to the end-points using the determined first list position and the determined second list position. For the end-points whose status is determined to be "processed", the processor retrieves basic block information of the end-points using updated location information of the end-point in the first list position and updated location information of the basic block information of the end-point in the second list position in the key information of the end-points. Furthermore, the processor determines status of at least one of, one or more child blocks of the second end-point based on the basic block information of the second end-point and one or more sibling blocks of the second end-point based on the basic block information of the first end-point. Finally, the processor determines one or more frontier branches based on the determined status of the at least one of, the one or more child blocks and the one or more sibling blocks.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The accompanying drawings, which are incorporated in and constitute a part of this disclosure, illustrate exemplary embodiments and, together with the description, explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and regarding the accompanying figures, in which:
**FIG. 1A** shows an exemplary illustration of control flow graph of a software code, in accordance with some embodiments of the present disclosure;
**FIG. 1B** shows an exemplary architecture for determining one or more frontier branches during software testing using a proposed processing system, in accordance with some embodiments of the present disclosure;
**FIGs. 1C** and **1D** show an exemplary look-up database, in accordance with some embodiments of the present disclosure;
**FIG. 1E** shows a flowchart illustrating an exemplary method of determining basic block information, in accordance with some embodiments of the present disclosure;
**FIG. 1F** shows a flowchart illustrating an exemplary method of performing look-up operation in look-up table, in accordance with some embodiments of the present disclosure;
**FIG. 1G** shows a flowchart illustrating an exemplary method of adding and removing frontier branches, in accordance with some embodiments of the present disclosure;
**FIG. 2** shows a detailed block diagram of a processing system, in accordance with some embodiments of the present disclosure;
**FIG. 3** is a flowchart illustrating a method of determining one or more frontier branches during software testing, in accordance with some embodiments of the present disclosure; and
**FIG. 4** illustrates a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the specific forms disclosed, but on the contrary, the disclosure is to cover all modifications, equivalents, and alternative falling within the scope of the disclosure.

The terms "comprises", "comprising", "includes", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

Definitions of the key terminologies used in the present disclosure are defined below for proper understanding of the description comprising various embodiments of the present disclosure.

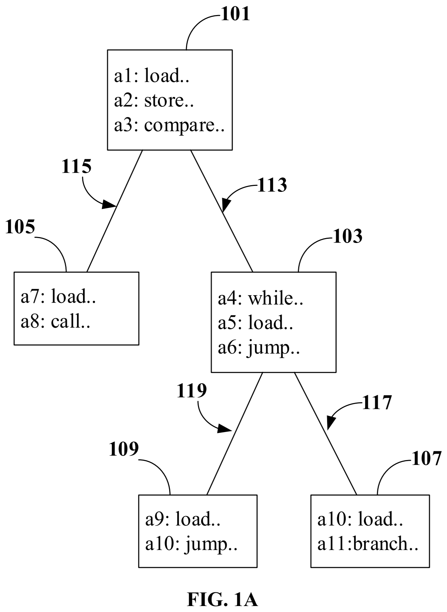

**Basic block:** Basic block is a fundamental unit of a software code that comprises a sequence of instructions executing in an order. Blocks **101-109** as shown in **FIG. 1A** may be referred as basic blocks.

**Branch:** Branch refers to a connection between the basic blocks. Each branch comprises key information associated with each of its two-end points, characterized as first end-point and second end-point in the context of the present disclosure. As shown in **FIG. 1A****, "113"** indicates a branch connecting the basic blocks **101** and **103.** Similarly, in **FIG. 1A****,** branch **115** is connecting the basic blocks **101** and **105,** branch **117** is connecting the basic blocks **103** and **107** and branch **119** is connecting the basic blocks **103** and **109.**

**End-point:** End-point refers to a basic block which may include one or more addresses. As illustrated in **FIG. 1A****,** basic blocks **101** and **103,** may be end-points which are connected by a branch **113.** The first end-point is **101** and second end-point is **103.** Further, an address of an endpoint may refer to a first address in that basic block. As an example, address of an end-point **101** is **a1** as shown in **FIG. 1A****.**

**First list position:** Indicates location of file information related to an end-point in a first list of a look-up database.

**Second list position:** Indicates location of basic block information related to an end-point in a second list of the look-up database.

**Frontier branch:** During software testing, branch of a software code under test which is not executed may be referred as a frontier branch. Generally, a basic block succeeding the frontier branch would be unexecuted but the basic block preceding the frontier branch would be executed. Referring to **FIG. 1A****,** branch **117** may be referred as a frontier branch where the basic block **107** succeeding the branch **117** is not executed but the basic block **103** preceding the branch **117** is executed.

As outlined in the background section, the technical issue pertains to lack of a system for determining one or more frontier branches in real-time in a software code under test. Prior to initiation of the software testing process, the processing system may generate a look-up database using the software code that needs to be tested. The look-up database thus created may include, but not limited to, a first list, a first list binary search tree, a second list, a second list binary search tree, a third list, and a fourth list, that enable accessing information related to each of the one or more basic blocks of the software code under test, and are explained in detail in further sections of the detailed description. Once the look-up database is generated, the processing system may receive a branch of a software code under test from a fuzzer associated with the processing system. The branch comprises key information associated with each of its two end-points characterized as first end-point and second end-point. The key information comprises address of the end-point, a first list position indicative of location of file information related to the end-point in the first list of the look-up database and a second list position indicative of location of a basic block information related to the end-point in a second list of the look-up database.

When the branch is received, the processing system may determine status of each of the two end-points to be "processed" or "not-processed" based on the corresponding key information. For the end-points whose status is determined to be "not-processed", the processing system may determine from the look-up database, the first list position and the second list position of the end-points and retrieves basic block information related to the end-points using the determined first list position and the determined second list position. Process of determining the first list position and the second list position is explained in detail in the later part of the description. For the end-points whose status is determined to be "processed", the processing system may retrieve from the key information of the end-points, basic block information of the end-points using updated location information of the end-point in the first list position and updated location information of the basic block information of the end-point in the second list position. Upon determining the basic block information, the processing system may determine status of at least one of, one or more child blocks of the second end-point based on the basic block information of the second end-point and one or more sibling blocks of the second end-point based on the basic block information of the first end-point. Finally, the processing system may determine one or more frontier branches based on the determined status of the at least one of, the one or more child blocks and the one or more sibling blocks. The one or more frontier branches may be displayed on a display device associated with the processing system.

The present disclosure generates a look-up database prior to starting the process of software testing. The look-up database stores basic block information of each basic block in a software code being tested. The processing system may determine one or more frontier branches based on the status of the at least one of, the one or more child blocks and the one or more sibling blocks in real-time without exclusively executing the one or more sibling blocks and the one or more child blocks. The basic block information of the end-point includes one or more child pointers indicating the first list position and the second list position of the one or more child blocks of the end-point in the look-up database, which helps in retrieving the basic block information of the one or more child blocks. The basic block information of the one or more child blocks helps in determining the flag status of one or more child blocks which indicates if the one or more child blocks were previously executed or not. Further, the processing system updates key-information the first list position with location information of the end-point in the first list and the second list position with location information of the basic block information of the end-point in the second list, which avoids the additional processing which is required to search the first list position and the second list position of the end-points, when the end-points are encountered again. This also helps in reducing the time consumed for testing. Further, the processing system determines the one or more frontier branches based on the flag status in the basic block information instead of re-execution of software under test. The one or more frontier branches are displayed on a display device in real-time, enabling the software tester to address the one or more frontier branches in real-time without stopping the testing process.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

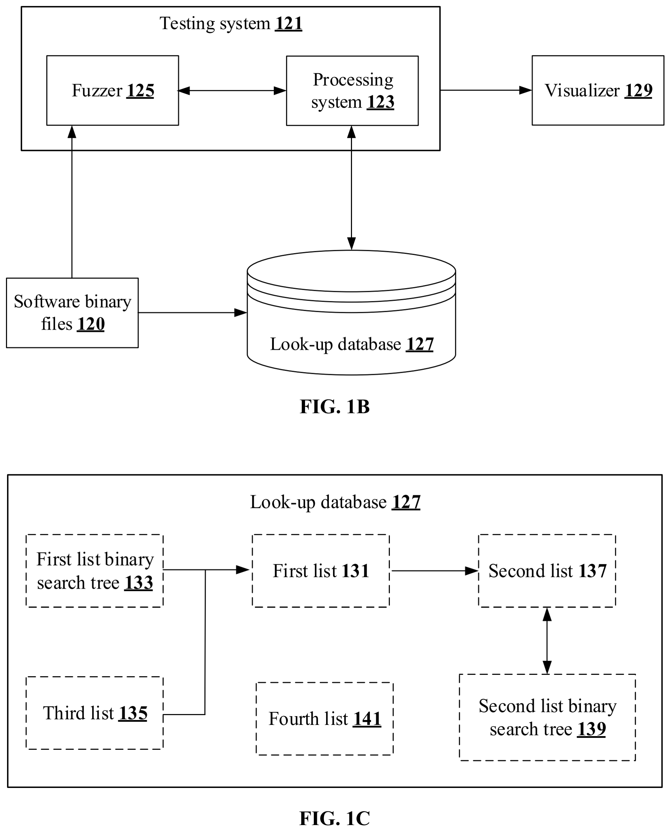

**FIG. 1B** shows an exemplary architecture for determining one or more frontier branches during software testing, in accordance with some embodiments of the present disclosure.

Exemplary architecture illustrates software binary files **120,** testing system **121,** a look-up database **127,** and a visualizer **129.** The testing system **121** may include a fuzzer **125** and a processing system **123,** wherein the fuzzer **125** communicates with the processing system **123** and the processing system **123** may be associated with the look-up database **127.** In an embodiment, the testing system **121** may receive software binary files **120** from a user/tester. The software binary files **120** may be the software files which may be tested by the testing system **121.** In an embodiment, the testing system **121** may be associated with the visualizer **129,** which may be a display device used to display frontier branches. The details related to displaying frontier branches are discussed in further sections of the present disclosure. In an embodiment, the testing system **121** may be configured in a computing device. As an example, the computing device may include, without limitation, any device used by a user such as, but not limited to, mobile phones, smartphones, laptops, and Personal Computers (PCs). In some embodiments, the processing system **123** may be external to the fuzzer **125** and associated with the fuzzer **125** through a communication network (not shown in figure). As an example, the communication network may be a wired communication network, a wireless communication network or a combination of both. In an embodiment, the fuzzer **125** may be a software testing tool which executes a software multiple times, each time with a different input to find anomalous behavior in the software. The fuzzer **125** may include, without limitation, a dynamic instrumentation module which may receive information related to the location of executed block during the execution. As an example, the fuzzer **125** may include, without limitation, AFL++, HongFuzz, AFLSmart and LibFuzzer.

In an embodiment, the look-up database **127** may be generated prior to starting the process of software testing using the software binary files **120** of the software under test. In an embodiment, the software binary files **120** may be pre-processed and compiled prior to the testing, using a pre-processor (not shown in figures) to generate the look-up database **127.** The software under test may include one or more basic blocks and one or more branches connecting corresponding basic blocks, which may together form a Control Flow Graph (CFG). The branch may be a logical connection between two basic blocks. **FIG. 1A** shows an exemplary CFG which includes basic blocks **101-109** and branches **113-119.** For instance, the branch **113** may connect the basic blocks **101** and **103.**

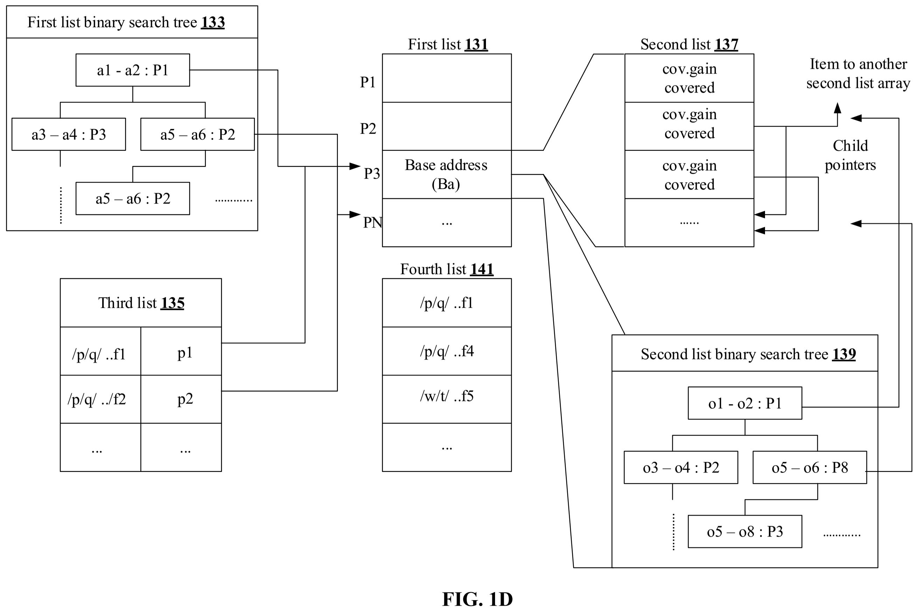

As shown in **FIG. 1C****,** the look-up database **127** of **FIG. 1C** may include, without limitation, a first list **131,** first list binary search tree **133,** third list **135,** second list **137,** second list binary search tree **139** and fourth list **141.** The first list **131** may store information related to end-points of each branch of software code under test. **FIG. 1D** shows an exemplary look-up database **127** which may include similar entities as **FIG. 1C****.** In the context of the present disclosure, the file information of the end-points may be determined in real-time when the end-points are encountered/discovered during software testing. The file information may comprise location of basic block information of the end-points in the second list **137** of the look-up database **127.** The second list **137** may store basic block information of the one or more basic blocks. The basic block information may include, without limitation, at least one of coverage gain value indicating total number of successor blocks associated with the end-points, a flag value indicating if the end-points were previously executed and one or more child pointers indicating first list position and second list position of the one or more child blocks of the end-points.

The first list binary search tree **133** may store a plurality of address ranges which may map to a corresponding plurality of locations of the file information of the end-points in a first list **131.** The third list **135** may include file name and location of the file information of the end-points in the first list **131.** In an embodiment, the third list **135** may be a pre-generated list which may be generated prior to starting of software testing process. As an example, the third list **135** may be a lookup table. The fourth list **141** may store a list of files which are loaded in the look-up database **127** during software testing. The fourth list **141** may be used to avoid reloading of the files that are present in the lookup database **127.** In an embodiment, the look-up database **127** may be used during the software testing to determine the basic block information related to the end-points.. In a given implementation, when the user submits a list of software binary files **120** for testing, the second list **137** and the second list binary search tree **139** the third list **135** may be generated within the look-up database **127.** In some embodiments, the first list **131,** the first list binary search tree **133,** the fourth list **141** of the look-up database **127** may be updated dynamically during the software testing process.

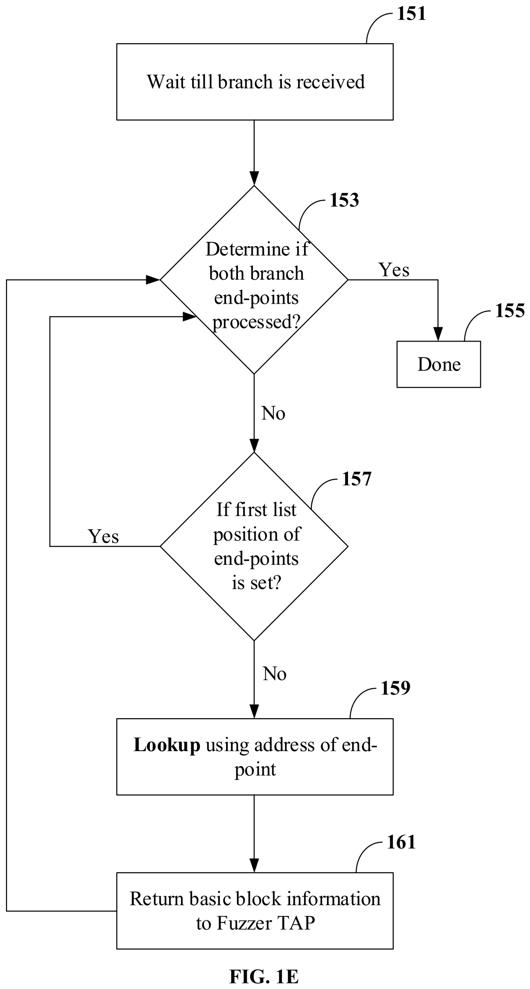

In an embodiment, the processing system **123** may be configured to receive the branch of the software code under test i.e., the software binary files **120** from the fuzzer **125** associated with the processing system **123** (as shown in step 151 of **FIG. 1E**). The branch may include key information associated with each of its two end-points characterized as first end-point and second end-point. The key information may include, without limitation, address of the end-point, a first list position indicative of location of file information related to the end-point in the first list **131** of a look-up database **127** and a second list position indicative of location of a basic block information related to the end-point in the second list **137** of the look-up database **127.** As illustrated in **FIG. 1A****,** the branch **113** may connect the basic blocks **101** and **103,** the branch may consist of two-end points characterized as first end-point **101** and second end-point **103.** In some embodiments, the key information may also include, file boundary. The file boundary is discussed further in detail in the present disclosure.

In an embodiment, upon receiving the branch, the processing system **123** may be configured to determine status of each of the two end-points to be one of "processed" or "not-processed" based on the corresponding key information (as shown in step 153 of **FIG. 1E**). In an embodiment, the end-points may be determined to be "processed" when the first list position is updated with location information of the end-point in the first list **131** and the second list position is updated with location information of the basic block information of the end-point in the second list **137.** In some embodiments, upon processing the end-points, the processing system **123** may not find the location information of the end-point in the first list **131** and the location information of the basic block information of the end-point in the second list **137** to update the first list position and the second list position in the key information. In such scenarios, the first list position and the second list position may be updated with an invalid value. As an example, the invalid value may be "-1", which may indicate that the end-points have been processed, however, the first list position and the second list position are not found even after performing the look-up operation. In an embodiment, the end-points may be determined to be "not-processed" when the first list position and the second list position include a value that indicates that the end-points are unset. As an example, when the value of the first list position and the second list position is "-2", this may indicate that the first list position and the second list position are unset. In other words, the value "-2" may indicate that the end-points are not processed. In some embodiments, the status of both the end-points may be "not processed". In some other embodiments, the status of one of the end-point may be "processed" and the status of other end-point may be "not processed". In yet other embodiments, the status of both the end-points may be "processed".

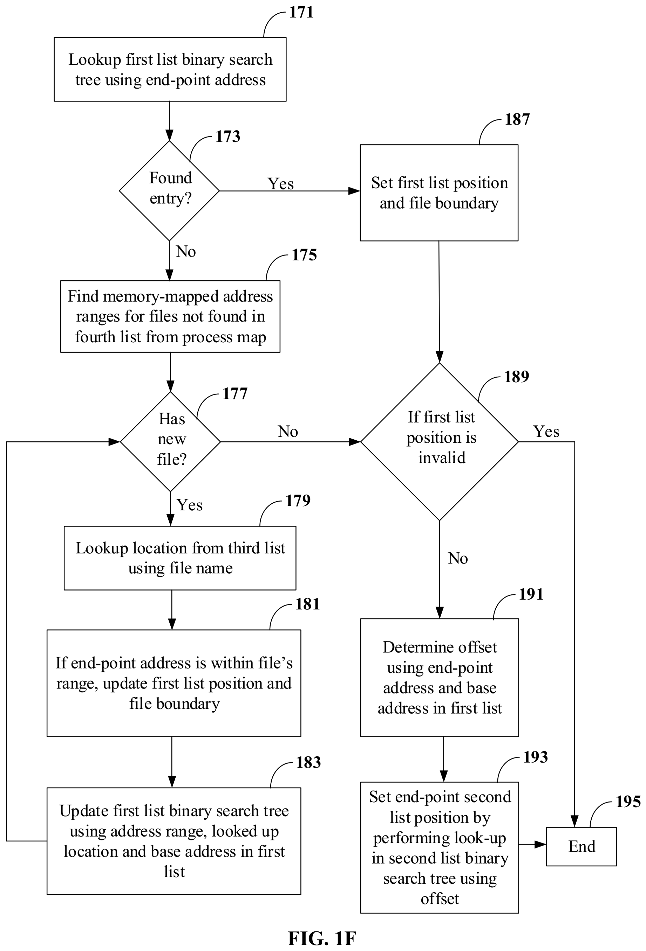

If it is determined at step 153 that both the end-points are processed, the method proceeds to step 155 via "Yes". If it is determined at step 153 that both the end-points are "not processed", the method proceeds to step 157 via "No". At step 157 of **FIG. 1E****,** the method includes checking if the first list position of the end-points is set or unset. If the first list position is set, the method proceeds to step 153 via "Yes" as discussed above. If the first list position is unset, the method proceeds to step 159 via "No". At step 159, the processing system **123** may perform look-up operation for the first list position and the second list position of the end-points using address of the end points which is discussed further and illustrated in **FIG. 1F****.** Upon performing the look-up operation, the basic block information of the end-points is returned to fuzzer **125** (step 161). The first list position in the key information may be updated with location information of the end-point in the first list and the second list position in the key information may be updated with location information of the basic block information of the end-point in the second list. This will avoid the look-up operation to be performed again if the same end-points are encountered. Upon returning the basic block information of the end-points to the fuzzer **125,** the method returns to step 153 to determine if both the branch end-points are processed. In case, both the end-points are processed, then the processing system **123** may wait for new branches to be received. However, if the first list position is set, the process may return to step 153 as the first list position is already present in the fuzzer **125.**

Further, the method of performing a look-up operation in look-up table as indicated in step 159 above, is illustrated further via **Fig.1F****.** At step 171 of **FIG. 1F****,** the processing system **123** may determine an address range to which the address of the end-points belong from a plurality of address ranges stored in a first list binary search tree **133** of the look-up database **127.** Each of the plurality of address ranges map to a corresponding plurality of locations in the first list **131.** Upon determining the address range, the processing system **123** may determine the first list position of the end-points in the plurality of locations in the first list **131** corresponding to the determined address range. In other words, the processing system **123** may determine if entry is found in the first list binary search tree **133** (as shown in step 173 of **FIG. 1F**). If the entry is found, the method proceeds to step 187 as shown in **FIG.1F****.** If the entry is not found, the method proceeds to step 175 as shown in the **FIG. 1F**. At step 187, the processing system **123** may set the first list position with value of the entry found and file boundary of the end-point with key of the entry found (as shown in step 187 of **FIG. 1F**). The value of the entry found may indicate the position in the first list **131** and the key of the entry found may be a range of addresses which may indicate file boundary of the end-point. In some embodiments, the processing system **123** may update the file boundary of the end-points to the fuzzer **125.** The fuzzer **125** may only publish the branch i.e., provide the branch to processing system **123** if the branch belongs to a file that is present in the user provided software binary files. As an example, Libc is a C standard library that is usually packaged into the operating system and Libc is agnostic of the software binary files provided by the user. As such, the user may choose to avoid scanning for bugs in a Libc binary file. To validate whether the newest branch i.e., a branch succeeding the current branch is present in an invalid file, the fuzzer **125** may verify if the branch belongs to the file boundary of the previous branch and if the invalid value is present in first list position and the second list position. If the newest branch is present in an invalid file, the fuzzer **125** may not send the branch to the processing system **123** to determine the first list position and the second list position of the end-points associated with the newest branch. This avoids additional processing as the newest branch is present in the invalid file.

As an example, if the address range is 1200-1800 which may map to a location "300" in the first list **131** and the address of the end-point in the key information is "1300" which is within the range of 1200-1800 which maps to the location "300" in the first list **131.** Then the first list position may be "300" which includes the base address of the end-point. The file boundary may be "1200-1800" which may be the range in the first list binary search tree **133.** Upon determining the first list position, at step 189, the processing system **123** may determine if an invalid value is present in the first list position. As discussed in the earlier sections, in some scenarios, the processing system **123** may not determine the first list position even after performing the look-up operation. As an example, if a user does not want to test a particular file, in such a scenario, the first list position may not be found. Then, the process will end (as shown in step 195 of **FIG. 1F**).

In an embodiment, if a valid value is present in the first list position, the method proceeds to step 191 of **FIG.1F****,** where the processing system **123** may obtain the offset of the end-points based on the difference between the address of the end-points and the corresponding base address of the end-points. Considering the above example, the address of the end-point is "1300" and the base address of the end-point in the first list position "300" is "800". The offset obtained upon performing subtraction operation on the address of the end-point and the base address of the end-point is "500". In an embodiment, upon obtaining the offset, the processing system **123** may determine an offset range to which the offset of the end-points belongs from a plurality of offset ranges stored in a second list binary search tree **139** of the look-up database **127.** Each of the plurality of offset ranges map to a corresponding plurality of locations in the second list **137.** Further, the processing system **123** may determine the second list position of the end-points corresponding to the determined offset range from the plurality of locations in the second list (as shown in step 193 of **FIG. 1F**).

Returning to step 173, in an embodiment, if the entry is not found in the first list binary search tree **133,** the method proceeds to step 175. At step 175, the processing system **123** may find memory mapped address range of the end-points from a process map for files which are not loaded in the fourth list **141** (as shown in step 175 of **FIG. 1F**). If the processing system **123** then determines that there is a new file present in the fourth list **141** which was earlier not loaded in the first list binary search tree **133,** the processing system **123** may look-up for the location of the new file in third list **137** using the file name (as shown in step 177 and 179 of **FIG. 1F**). In an embodiment, if new file is not present, the process may return to step 189 to determine if the value in the first list position is valid or invalid as discussed above. Upon performing look-up operation in the third list **137,** the processing system **123** determines if the end-point address is within file's range (as shown in step 181 of **FIG. 1F**). The processing system **123** may update first list binary search tree **133** with address range and looked up location i.e., first list position and base address in first list **131** corresponding to the first list position (as shown in step 183 of **FIG. 1F**). Thereafter, the process may return to step 177, in which the second list position may be determined as already discussed above.

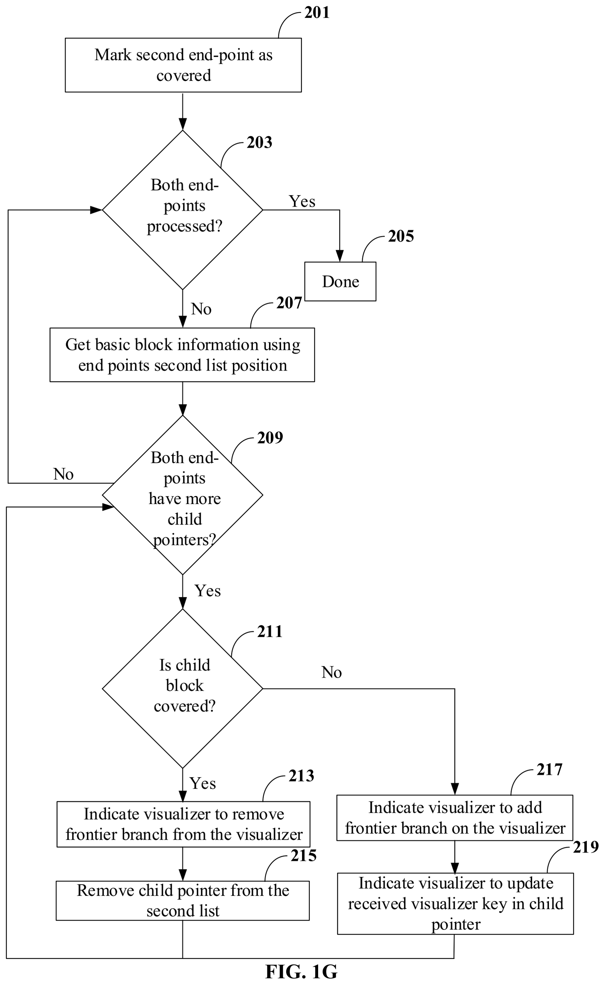

In an embodiment, upon determining the first list position and the second list position of the end-points, the processing system **123** may retrieve the basic block information related to the end points using the determined first list position and the determined second list position. In an embodiment, the processing system **123** may update the flag status in the basic block information of the end-points upon retrieving the basic block information. As an example, the processing system **123** may update the flag status from "0" to "1" to indicate that the end-points are now processed/visited (as shown in step 201 of **FIG. 1G**). In an embodiment, the processing system **123** may update in the key-information of the corresponding end-point, the first list position with location information of the end-point in the first list **131** and the second list position with location information of the basic block information of the end-point in the second list **137.**

In an embodiment, for the end-points whose status is determined to be "processed", the processing system **123** may retrieve basic block information of the end-points using updated location information of the end-point in the first list position and updated location information of the basic block information of the end-point in the second list position, in the key information of the end-points (as shown in step 207 of **FIG. 1G**). As discussed above, when either of the end-points among the two end-points is processed, the processing system **123** may directly retrieve the basic block information using the first list position and the second list position updated in the key information of the processed end-points in a previous iteration. This avoids the additional processing of determining the first list position and the second list position of the end-points which are already processed.

In an embodiment, upon retrieving the basic block information related to the end-points, the processing system **123** may determine if the end-points have one or more child pointers (as shown in step 209 of **FIG. 1G**). In other words, the processing system **123** may determine if the first end-point and the second end-point have one or more child blocks. In some embodiments, the processing system **123** may determine status of at least one of, one or more child blocks of the second end-point among the end-points of the branch, based on the basic block information of the second end-point and one or more sibling blocks of the second end-point based on the basic block information of the first end-point among the end-points of the branch (as shown in step 211 of **FIG. 1G**). In this context, one or more sibling blocks of the second end-point may also be referred to as one or more child blocks of the first end-point. In an exemplary CFG shown in **FIG. 1A****,** consider an exemplary scenario in which the branch **113** is received for testing and the branch **113** has a first end-point **101** and a second end-point **103.** The basic block **107** and basic block **109** are child blocks of the second end-point **103,** and the basic block **105** is a sibling block of the second end-point **113B.**

In an embodiment, upon determining the status of at least one of, the one or more child blocks of the second end-point and one or more sibling blocks of the second end-point, the processing system **123** may determine one or more frontier branches based on the determined status of the at least one of, the one or more child blocks and the one or more sibling blocks. In an embodiment, based on the flag value in the basic block information, the processing system **123** may determine one or more frontier branches. For instance, if the flag value is "0" for a child block, this may indicate that the child block is not executed/not visited. Similarly, if the flag value is "0" for a sibling block, this may indicate that the sibling block is not executed/not visited. Alternatively, if the flag value is "1" for a child block, this may indicate that the child block is executed/visited. Similarly, if the flag value is "1" for a sibling block, this may indicate that the sibling block is executed/visited. In an embodiment, when a basic block succeeding a branch is unexecuted but the basic block preceding the branch is executed, then the branch may be referred as frontier branch. Referring to **FIG. 1A****,** branch **117** may be referred as a frontier branch where the basic block **107** succeeding the branch **117** is not executed but the basic block 103 preceding the branch **117** is executed.

The processing system **123** may indicate to a display device (also referred to as a visualizer **129**) associated with the processing system **123** to display the one or more frontier branches in real-time. The processing system **123** may also indicate the visualizer **129** to remove the one or more frontier branches from the visualizer **129** in real-time as the flag value changes from "0" to "1" (as shown in step 213 of **FIG. 1G**). Referring to **FIG. 1A****,** branch **117** may no longer be referred as the frontier branch when the basic block **107** succeeding the branch **117** is executed. Upon performing the step 213, the processing system **123** may remove the child pointer from the second list **137.** This may avoid the requirement to determine the status of the same child block which is already visited/covered. In this manner, the child blocks which are visited/covered, the corresponding child pointers are removed from the second list **137.** As the flag value changes, the one or more frontier branches are added/deleted in real-time from the display device. Referring to step 217 of **FIG. 1G****,** the processing system **123** may indicate the visualizer **129** to add the frontier branch on the visualizer **129** if one or more child blocks are not covered. Further, the processing system **123** may update visualizer lookup key in the child pointer if the visualizer lookup key is available (as shown in 219 of **FIG. 1G**). In some embodiments, if the visualizer lookup key is not available, then the method returns to step 209 upon indicating the visualizer **129** to add the frontier branch (step 217 of **FIG. 1G**). In some embodiments, the basic block information may be updated to include visualizer lookup key which may be a key to look up locations of the one or more frontier branches in the display device. The visualizer lookup key may be used to update the one or more frontier branches displayed in the display device in real-time.

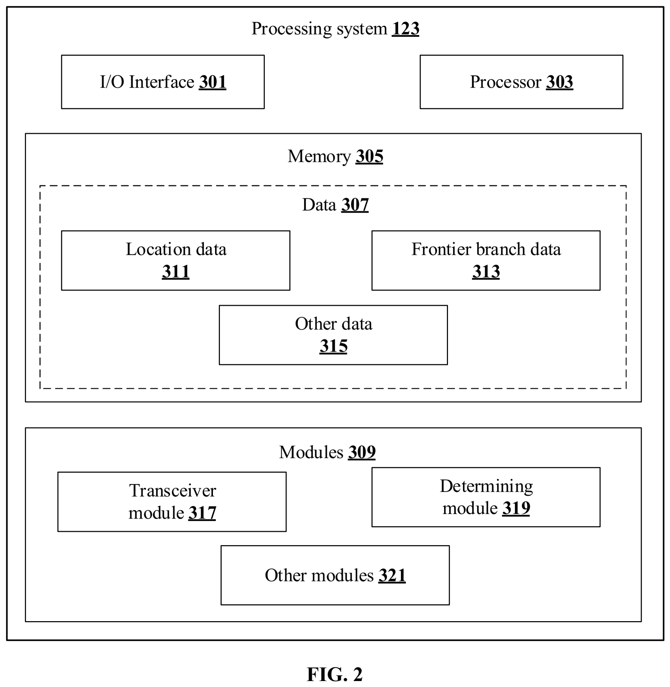

**FIG. 2** shows a detailed block diagram of processing system **123,** in accordance with some embodiments of the present disclosure.

In some implementations, the processing system **123** may be associated with a processing system **123,** the processing system **123** may include an I/O interface **301,** a processor **303** and a memory **305.** In an embodiment, the memory **305** may be communicatively coupled to the processor **303.** The processor **303** may be configured to perform one or more functions of the processing system **123** for detection of unexecuted code blocks during software testing, using the data **307** and the one or more modules **309** of the processing system **123.** In an embodiment, the memory **305** may store data **307.**

In an embodiment, the data **307** stored in the memory **305** may include, without limitation, location data **311,** frontier branch data **313** and other data **315.** In some implementations, the data **307** may be stored within the memory **305** in the form of various data structures. Additionally, the data **307** may be organized using data models, such as relational or hierarchical data models. The other data **315** may include various temporary data and files generated by the one or more modules **309.**

In an embodiment, the location data **311** may store updated location information of the end-point in the first list position and updated location information of the basic block information of the end-point in the second list position. The location data **311** may be updated in the fuzzer **125.** The location data **311** may be used by the processing system **123** to determine the basic block information of the end-points in the second list **137.**

In an embodiment, the frontier branch data **313** may store the current/active frontier branches in a software during software testing. In an embodiment, when a basic block succeeding a branch is unexecuted but the basic block preceding the branch is executed, then the branch may be referred as frontier branch. In an embodiment, the one or more frontier branches may be displayed to the user in real-time. In an embodiment, the frontier branch data **313** may be updated in real-time. For instance, if the basic block succeeding the frontier branch is executed, the branch may no longer be a frontier branch. Such branches which are no longer frontier branches are removed from the frontier branch data **313.**

In an embodiment, the data **307** may be processed by one or more modules **309** of the processing system **123.** In some implementations, the one or more modules **309** may be communicatively coupled to the processor **303** for performing one or more functions of the processing system **123.** In an implementation, the one or more modules **309** may include, without limiting to, a transceiver module **317,** a determining module **319** and other modules **223.**

As used herein, the term module may refer to an Application Specific Integrated Circuit (ASIC), an electronic circuit, a hardware processor **303** (shared, dedicated, or group) and memory that execute one or more software or firmware programs, a combinational logic circuit, and/or other suitable components that provide the described functionality. In an implementation, each of the one or more modules **309** may be configured as stand-alone hardware computing units. In an embodiment, the other modules **223** may be used to perform various miscellaneous functionalities on the processing system **123.** It will be appreciated that such one or more modules **309** may be represented as a single module or a combination of different modules.

In an embodiment, the transceiver module **317** may be configured to receive a branch of a software code under test from a fuzzer **125** associated with the processing system **123.** The branch comprises key information associated with each of its two end-points characterized as first end-point and second end-point. The key information comprises address of the end-point, a first list position indicative of location of file information related to the end-point in a first list of a look-up database and a second list position indicative of location of a basic block information related to the end-point in a second list of the look-up database. As an example, prior to testing, the first list position and the second list position may store a value "-2" which may indicate that the end-points are not processed. The look-up database may include, without limitation, at least one of first list **131,** first list binary search tree **133,** third list **135,** second list **137,** second list binary search tree **139** and fourth list **141.**

In an embodiment, the determining module **319** may be configured for determining status of each of the two end-points to be "processed" or "not-processed" based on the corresponding key information. In an embodiment, for the end-points whose status is determined to be "not-processed", the determining module **319** may determine from the look-up database for the end-points, the first list position and the second list position of the end-points. The end-points may be determined to be "not-processed" when the first list position and the second list position comprises an unset value. In some embodiments, upon processing the end-points, the determining module **319** may not find the location information of the end-point in the first list **131** and the location information of the basic block information of the end-point in the second list **137** to update the first list position and the second list position in the key information.. In such scenarios, the first list position and the second list position may be updated with an invalid value. As an example, the invalid value may be "-1", which may indicate that the end-points have been processed, however, the first list position and the second list position are not found even after performing the look-up operation. In an embodiment, the end-points may be determined to be "not-processed" when the first list position and the second list position include a value that indicates that the end-points are unset. As an example, when the value of the first list position and the second list position is "-2", this may indicate that the first list position and the second list position are unset. In other words, the value "-2" may indicate that the end-points are not processed.

In an embodiment, the determining module **319** may determine an address range to which the address of the end-points belong from a plurality of address ranges stored in a first list binary search tree **133** of the look-up database. Each of the plurality of address ranges map to a corresponding plurality of locations in the first list **131.** Further, the determining module **319** may determine the first list position of the end-points in the plurality of locations in the first list **131** corresponding to the determined address range. As an example, referring to **FIG. 1D****,** the address range "al-a2" corresponds to location P1 in the first list **131.** Similarly, the address range "a3-a4" corresponds to location P3 in the first list **131.** Therefore, the first list position may be P1, if the address of the end-points is within range "a1-a2". Upon determining the first list position, the determining module **319** may perform a predefined operation using the address of the end-points and the base address in the first list position to obtain an offset of the end-points. As an example, the predefined operation may be subtraction operation. The determining module **319** may subtract the base address of the end-points from the address of the end-points to obtain the corresponding offset. Upon obtaining the offset, the determining module **319** may determine an offset range to which the offset of the end-points belongs from a plurality of offset ranges stored in a second list binary search tree **139** of the look-up database. Each of the plurality of offset ranges map to a corresponding plurality of locations in the second list **137.** Further, the determining module **319** may determine the second list position of the end-points in the plurality of locations in the second list **137** corresponding to the determined offset range. As an example, referring to **FIG. 1D**, the offset range "o1-o2" corresponds to location P1 in the second list **137.** Similarly, the offset range "o5-o6" corresponds to location P8 in the second list **137.** Therefore, the second list position may be P1, if the offset of the end-points is within range "o1-o2". Thereafter, the determining module **319** may retrieve basic block information related to the end points using the second list position. In an embodiment, the determining module **319** may further update in the key-information, the first list position with location information of the end-point in the first list **131** and the second list position with location information of the basic block information of the end-point in the second list **137.**

In an embodiment, for the end-points whose status is determined to be "processed", the determining module **319** may retrieve basic block information of the end-points using updated location information of the end-point in the first list position and updated location information of the basic block information of the end-point in the second list position in the key information of the end-points. The end-points are determined to be "processed" when the first list position in the key information is updated with location information of the end-point in the first list **131** and the second list position in the key information is updated with location information of the basic block information of the end-point in the second list **137.** In some embodiments, determining module **319** may may determine if the first list position is invalid based on an invalid value present in the first list position. As discussed in the earlier sections, in some scenarios, the determining module **319** may not determine the first list position even after performing the look-up operation. As an example, if a user does not want to test a particular file, in such a scenario, the first list position may not be found. Then, the lookup process will end for such end-points.

Further, the determining module **319** may determine status of at least one of, one or more child blocks of the second end-point based on the basic block information of the second end-point and one or more sibling blocks of the second end-point based on the basic block information of the first end-point. Thereafter, the determining module **319** may determine one or more frontier branches based on the determined status of the at least one of, the one or more child blocks and the one or more sibling blocks. The one or more frontier branches may be displayed on the visualizer **129** associated with the processing system **123.**

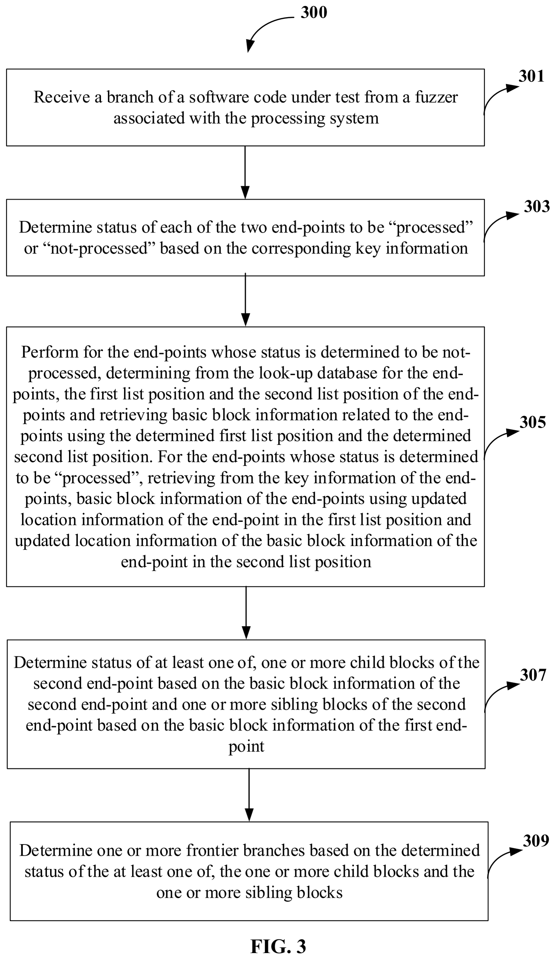

**FIG. 3** is a flowchart illustrating a method of determining one or more frontier branches during software testing, in accordance with some embodiments of the present disclosure.

As illustrated in **FIG. 3****,** the method **300** may include one or more blocks illustrating a method of determining one or more frontier branches during software testing using the processing system **123** illustrated in **FIG. 2****.** The method **300** may be described in the general context of computer executable instructions. Generally, computer executable instructions can include routines, programs, objects, components, data structures, procedures, modules, and functions, which perform specific functions or implement specific abstract data types.

The order in which the method **300** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At block **301,** the method **300** includes receiving, by a processor **303** of the processing system **123,** a branch of a software code under test from a fuzzer associated with the processing system. The branch may include, without limitation, key information associated with each of its two end-points characterized as first end-point and second end-point. The key information may include, without limitation, address of the end-point, a first list position indicative of location of file information related to the end-point in a first list **131** of a look-up database **127** and a second list position indicative of location of a basic block information related to the end-point in a second list **137** of the look-up database **127.** The look-up database **127** may include, without limitation, at least one of first list **131,** second list **137,** third list **135,** fourth list **141,** first list binary search tree **133** and second list binary search tree **139.**

At block **303,** the method **300** includes determining, by the processor **303,** status of each of the two end-points to be "processed" or "not-processed" based on the corresponding key information. In an embodiment, the end-points may be determined to be "processed" when the first list position in the key information is updated with location information of the end-point in the first list **131** and the second list position in the key information is updated with location information of the basic block information of the end-point in the second list **137.** In an embodiment, the end-points are determined to be "not-processed" when the first list position and the second list position comprises an unset value.

At block **305,** based on the determination of the status of each of the two end points, the method **300** includes performing, by the processor **303,** one of, for the end-points whose status is determined to be "not-processed", determining from the look-up database **127** for the end-points, the first list position and the second list position of the end-points and retrieving basic block information related to the end-points using the determined first list position and the determined second list position. For the end-points whose status is determined to be "processed", the method comprises retrieving basic block information of the end-points using updated location information of the end-point in the first list position and updated location information of the basic block information of the end-point in the second list position in the key information of the end-points. The basic block information may include, without limitation, at least one of coverage gain value indicating total number of successor blocks associated with the end-points, a flag value indicating if the end-points were previously executed and one or more child pointers indicating first list position and second list position of the one or more child blocks of the second end-point. In an embodiment, the processor may determine an address range to which the address of the end-points belong from a plurality of address ranges stored in a first list binary search tree **133** of the look-up database **127.** Each of the plurality of address ranges map to a corresponding plurality of locations in the first list **131.** Further, the processor may determine the first list position of the end-points in the plurality of locations in the first list **131** corresponding to the determined address range. Upon determining the first list position, the processor may perform a predefined operation using the address of the end-points and the base address in the first list position to obtain an offset of the end-points. The processor may subtract the base address of the end-points from the address of the end-points to obtain the corresponding offset. Upon obtaining the offset, the processor may determine an offset range to which the offset of the end-points belongs from a plurality of offset ranges stored in a second list binary search tree **139** of the look-up database **127.** Each of the plurality of offset ranges map to a corresponding plurality of locations in the second list **137.** Further, the processor may determine the second list position of the end-points in the plurality of locations in the second list **137** corresponding to the determined offset range. In an embodiment, the processor may further update in the key-information, the first list position with location information of the end-point in the first list **131** and the second list position with location information of the basic block information of the end-point in the second list **137.**

At block **307,** the method **300** includes determining, by the processor **303,** status of at least one of, one or more child blocks of the second end-point based on the basic block information of the second end-point and one or more sibling blocks of the second end-point based on the basic block information of the first end-point.

At block **309,** the method **300** includes determining, by the processor **303,** determining one or more frontier branches based on the determined status of the at least one of, the one or more child blocks and the one or more sibling blocks. In an embodiment, the processor **303** may indicate display device associated with the processing system **123** to display the one or more frontier branches.

### Computer System

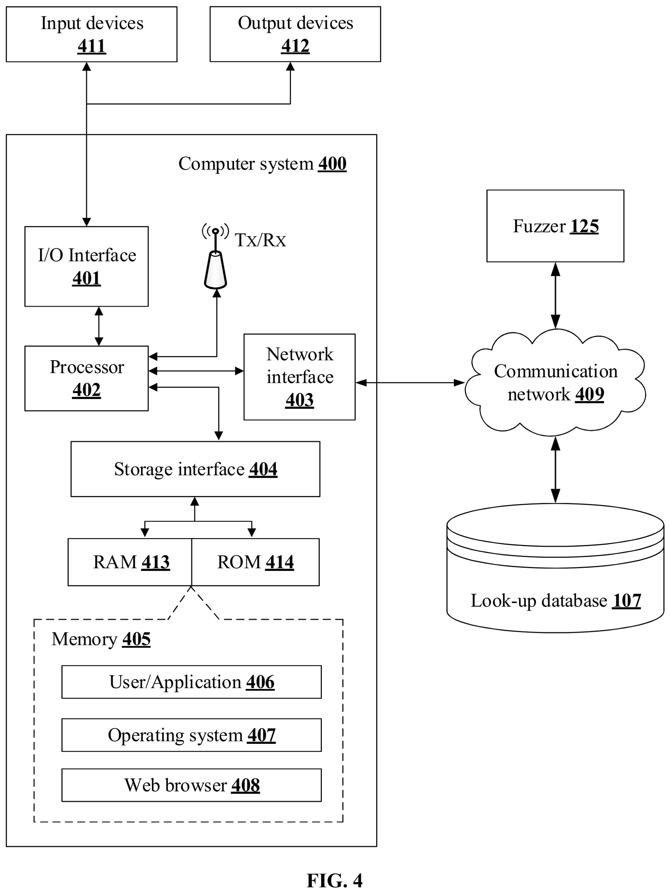

**FIG. 4** illustrates a block diagram of an exemplary computer system **400** for implementing embodiments consistent with the present disclosure. In an embodiment, the computer system **400** may be processing system **123** illustrated in **FIG. 1B** and **FIG.2****.** The computer system **400** may include a central processing unit ("CPU" or "processor" or "memory controller") **402.** The processor **402** may comprise at least one data processor for executing program components for executing user- or system-generated business processes. A user may include a network manager, an application developer, a programmer, an organization, or any system/sub-system being operated parallelly to the computer system **400.** The processor **402** may include specialized processing units such as integrated system (bus) controllers, memory controllers/memory management control units, floating point units, graphics processing units, digital signal processing units, etc.

The processor **402** may be disposed in communication with one or more Input/Output (I/O) devices (**411** and **412**) via I/O interface **401.** The I/O interface **401** may employ communication protocols/methods such as, without limitation, audio, analog, digital, stereo, IEEE^{®}-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE^{®} 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE) or the like), etc. Using the I/O interface **401,** the computer system **400** may communicate with one or more I/O devices **411** and **412.**

In some embodiments, the processor **402** may be disposed in communication with a network **409** via a network interface **403.** The network interface **403** may communicate with the network **409.** The network interface **403** may employ connection protocols including, without limitation, direct connect, Ethernet (e.g., twisted pair 10/100/1000 Base T), Transmission Control Protocol/Internet Protocol (TCP/IP), token ring, IEEE^{®} 802.11a/b/g/n/x, etc.

In an implementation, the preferred network **409** may be implemented as one of the several types of networks, such as intranet or Local Area Network (LAN) and such within the organization. The preferred network **409** may either be a dedicated network or a shared network, which represents an association of several types of networks that use a variety of protocols, for example, Hypertext Transfer Protocol (HTTP), Transmission Control Protocol/Internet Protocol (TCP/IP), Wireless Application Protocol (WAP) etc., to communicate with each other. Further, the network **409** may include a variety of network devices, including routers, bridges, transceiver systems, computing devices, storage devices, etc. Using the network interface **403** and the network **409,** the computer system **400** may communicate with a fuzzer **125** of a testing system **121** and a look-up database **127.**

In some embodiments, the processor **402** may be disposed in communication with a memory **405** (e.g., RAM **413,** ROM **414,** etc. as shown in **FIG. 6**) via a storage interface **404.** The storage interface **404** may connect to memory **405** including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **405** may store a collection of program or database components, including, without limitation, user/application interface **406,** an operating system **407,** a web browser **408,** and the like. In some embodiments, computer system **400** may store user/application data **406,** such as the data, variables, records, etc. as described in this invention. Such databases may be implemented as fault-tolerant, relational, scalable, secure databases such as Oracle^{®} or Sybase^{®}.

The operating system **407** may facilitate resource management and operation of the computer system **400.** Examples of operating systems include, without limitation, APPLE^{®} MACINTOSH^{®} OS X^{®}, UNIX^{®}, UNIX-like system distributions (E.G., BERKELEY SOFTWARE DISTRIBUTION^{®} (BSD), FREEBSD^{®}, NETBSD^{®}, OPENBSD, etc.), LINUX^{®} DISTRIBUTIONS (E.G., RED HAT^{®}, UBUNTU^{®}, KUBUNTU^{®}, etc.), IBM^{®} OS/2^{®}, MICROSOFT^{®} WINDOWS^{®} (XP^{®}, VISTA^{®}/7/8, 10 etc.), APPLE^{®} IOS^{®}, GOOGLE ^{™} ANDROID ^{™}, BLACKBERRY^{®} OS, or the like.

The user interface **406** may facilitate display, execution, interaction, manipulation, or operation of program components through textual or graphical facilities. For example, the user interface **406** may provide computer interaction interface elements on a display system operatively connected to the computer system **400,** such as cursors, icons, check boxes, menus, scrollers, windows, widgets, and the like. Further, Graphical User Interfaces (GUIs) may be employed, including, without limitation, APPLE^{®} MACINTOSH^{®} operating systems' Aqua^{®}, IBM^{®} OS/2^{®}, MICROSOFT^{®} WINDOWS^{®} (e.g., Aero, Metro, etc.), web interface libraries (e.g., ActiveX^{®}, JAVA^{®}, JAVASCRIPT^{®}, AJAX, HTML, ADOBE^{®} FLASH^{®}, etc.), or the like.

The web browser **408** may be a hypertext viewing application. Secure web browsing may be provided using Secure Hypertext Transport Protocol (HTTPS), Secure Sockets Layer (SSL), Transport Layer Security (TLS), and the like. The web browsers **408** may utilize facilities such as AJAX, DHTML, ADOBE^{®} FLASH^{®}, JAVASCRIPT^{®}, JAVA^{®}, Application Programming Interfaces (APIs), and the like. Further, the computer system **400** may implement a mail transceiver system stored program component. The mail transceiver system may utilize facilities such as ASP, ACTIVEX^{®}, ANSI^{®} C++/C#, MICROSOFT^{®}, .NET, CGI SCRIPTS, JAVA^{®}, JAVASCRIPT^{®}, PERL^{®}, PHP, PYTHON^{®}, WEBOBJECTS^{®}, etc. The mail transceiver system may utilize communication protocols such as Internet Message Access Protocol (IMAP), Messaging Application Programming Interface (MAPI), MICROSOFT^{®} exchange, Post Office Protocol (POP), Simple Mail Transfer Protocol (SMTP), or the like. In some embodiments, the computer system **400** may implement a mail client stored program component. The mail client may be a mail viewing application, such as APPLE^{®} MAIL, MICROSOFT^{®} ENTOURAGE^{®}, MICROSOFT^{®} OUTLOOK^{®}, MOZILLA^{®} THUNDERBIRD^{®}, and the like.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, nonvolatile memory, hard drives, Compact Disc (CD) ROMs, Digital Video Disc (DVDs), flash drives, disks, and any other known physical storage media.

In light of the technical advancements provided by the disclosed method, the claimed steps, as discussed above, are not routine, conventional, or not well-known aspects in the art, as the claimed steps provide the aforesaid solutions to the technical problems existing in the conventional technologies. Further, the claimed steps clearly bring an improvement in the functioning of the system itself, as the claimed steps provide a technical solution to a technical problem.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all the items are mutually exclusive, unless expressly specified otherwise. The terms "a", "an" and "the" mean "one or more", unless expressly specified otherwise.

A description of an embodiment with several components in communication with each other does not imply that all such components are required. On the contrary, a variety of optional components are described to illustrate the wide variety of possible embodiments of the invention.

When a single device or article is described herein, it will be clear that more than one device/article (whether they cooperate) may be used in place of a single device/article. Similarly, where more than one device/article is described herein (whether they cooperate), it will be clear that a single device/article may be used in place of the more than one device/article or a different number of devices/articles may be used instead of the shown number of devices or programs. The functionality and/or features of a device may be alternatively embodied by one or more other devices which are not explicitly described as having such functionality/features. Thus, other embodiments of invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

**Referral Numerals:**

| **Reference Number** | **Description** |
|---|---|
| 101-109 | Basic blocks |
| 113-119 | Branches |
| 120 | Software binary files |
| 121 | Testing system |
| 123 | Processing system |
| 125 | Fuzzer |
| 127 | Look-up database |
| 129 | Visualizer |
| 131 | First list |
| 133 | First list binary search tree |
| 135 | Third list |
| 137 | Second list |
| 139 | Second list binary search tree |
| 141 | Fourth list |
| 301 | I/O Interface |
| 303 | Processor |
| 305 | Memory |
| 307 | Data |
| 309 | Modules |
| 311 | Location data |
| 313 | Frontier branch data |
| 315 | Other data |
| 317 | Transceiver module |
| 319 | Determining module |
| 321 | Other modules |
| 400 | Computer system |
| 401 | I/O Interface of the exemplary computer system |
| 402 | Processor of the exemplary computer system |
| 403 | Network interface |
| 404 | Storage interface |
| 405 | Memory of the exemplary computer system |
| 406 | User/Application |
| 407 | Operating system |
| 408 | Web browser |
| 411 | Input devices |
| 412 | Output devices |
| 413 | RAM |
| 414 | ROM |

## Claims

1. A method of determining one or more frontier branches during software testing, the method comprising:
receiving, by a processing system (123), a branch of a software code under test from a fuzzer (125) associated with the processing system (123), wherein the branch comprises key information associated with each of its two end-points characterized as first end-point and second end-point, wherein the key information comprises address of the end-point, a first list position indicative of location of file information related to the end-point in a first list (131) of a look-up database (127) and a second list position indicative of location of a basic block information related to the end-point in a second list (137) of the look-up database (127);
determining, by the processing system (123), status of each of the two end-points to be "processed" or "not-processed" based on the corresponding key information;
based on the determination of the status of each of the two end points performing one of:
for the end-points whose status is determined to be "not-processed":
determining from the look-up database (127) for the end-points, by the processing system (123), the first list position and the second list position of the end-points; and
retrieving basic block information related to the end-points using the determined first list position and the determined second list position;
or
for the end-points whose status is determined to be "processed":
retrieving, by the processing system (123), basic block information of the end-points using updated location information of the end-point in the first list position and updated location information of the basic block information of the end-point in the second list position in the key information of the end-points;
determining, by the processing system (123), status of at least one of, one or more child blocks of the second end-point based on the basic block information of the second end-point and one or more sibling blocks of the second end-point based on the basic block information of the first end-point; and
determining, by the processing system (123), one or more frontier branches based on the determined status of the at least one of, the one or more child blocks and the one or more sibling blocks.

2. The method as claimed in claim 1, wherein the end-points are determined to be "processed" when the first list position in the key information is updated with location information of the end-point in the first list (131) and the second list position in the key information is updated with location information of the basic block information of the end-point in the second list (137).

3. The method as claimed in claim 1, wherein the end-points are determined to be "not-processed" when the first list position and the second list position comprises an unset value.

4. The method as claimed in claim 1, wherein the basic block information comprises at least one of coverage gain value indicating total number of successor blocks associated with the end-points, a flag value indicating if the end-points were previously executed and one or more child pointers indicating first list position and second list position of the one or more child blocks of the second end-point.

5. The method as claimed in claim 1, wherein the look-up database (127) comprises at least one of first list (131), second list (137), third list (135), fourth list (141), first list binary search tree (133) and second list binary search tree (139).

6. The method as claimed in claim 1, wherein determining the first list position and the second list position of the end-points comprises:
determining, by the processing system (123), an address range to which the address of the end-points belong from a plurality of address ranges stored in a first list binary search tree (133) of the look-up database (127), wherein each of the plurality of address ranges map to a corresponding plurality of locations in the first list (131); and
determining, by the processing system (123), the first list position of the end-points in the plurality of locations in the first list (131) corresponding to the determined address range;
performing, by the processing system (123), a predefined operation using the address of the end-points and the first list position to obtain an offset of the end-points;
determining, by the processing system (123), an offset range to which the offset of the end-points belongs from a plurality of offset ranges stored in a second list binary search tree (139) of the look-up database (127), wherein each of the plurality of offset ranges map to a corresponding plurality of locations in the second list (137);
determining, by the processing system (123), the second list position of the end-points in the plurality of locations in the second list (137) corresponding to the determined offset range; and
retrieving, by the processing system (123), the basic block information related to the end points using the second list position.

7. The method as claimed in claim 1, wherein determining the first list position and the second list position further comprises updating in the key-information the first list position with location information of the end-point in the first list (131) and the second list position with location information of the basic block information of the end-point in the second list (137).

8. The method as claimed in claim 1, further comprises:
indicating, by the processing system (123), a display device associated with the processing system (123) to display the one or more frontier branches.

9. A processing system (123) for determining one or more frontier branches during software testing, the processing system (123) comprising:
a processor (301); and
a memory (303), communicatively coupled to the processor (301), wherein the memory (303) stores processor executable instructions, which, on execution, causes the processor (301) to:
receive a branch of a software code under test from a fuzzer (125) associated with the processing system (123), wherein the branch comprises key information associated with each of its two end-points characterized as first end-point and second end-point, wherein the key information comprises address of the end-point, a first list position indicative of location of file information related to the end-point in a first list (131) of a look-up database (127) and a second list position indicative of location of a basic block information related to the end-point in a second list (137) of the look-up database (127);
determine status of each of the two end-points to be "processed" or "not-processed" based on the corresponding key information;
based on the determination of the status of each of the two end points performing one of:
for the end-points whose status is determined to be "not-processed":
determine from the look-up database (127) for the end-points, by the processing system (123), the first list position and the second list position of the end-points; and
retrieve basic block information related to the end-points using the determined first list position and the determined second list position;
or
for the end-points whose status is determined to be "processed":
retrieve basic block information of the end-points using updated location information of the end-point in the first list position and updated location information of the basic block information of the end-point in the second list position in the key information of the end-points;
determine status of at least one of, one or more child blocks of the second end-point based on the basic block information of the second end-point and one or more sibling blocks of the second end-point based on the basic block information of the first end-point; and
determine one or more frontier branches based on the determined status of the at least one of, the one or more child blocks and the one or more sibling blocks.

10. The processing system (123) as claimed in claim 9, wherein the processor (303) determines the end-points to be "processed" when the first list position in the key information is updated with location information of the end-point in the first list (131) and the second list position in the key information is updated with location information of the basic block information of the end-point in the second list (137).

11. The processing system (123) as claimed in claim 9, wherein the processor (303) determines the end-points to be "not-processed" when the first list position and the second list position comprises an unset value.

12. The processing system (123) as claimed in claim 9, wherein the basic block information comprises at least one of coverage gain value indicating total number of successor blocks associated with the end-points, a flag value indicating if the end-points were previously executed and one or more child pointers indicating first list position and second list position of the one or more child blocks of the second end-point.

13. The processing system (123) as claimed in claim 9, wherein the look-up database (127) comprises at least one of first list (131), second list (137), third list (135), fourth list (141), first list binary search tree (133) and second list binary search tree (139).

14. The processing system (123) as claimed in claim 9, wherein to determine the first list position and the second list position of the end-points, the processor (303) is configured to:
determine an address range to which the address of the end-points belong from a plurality of address ranges stored in a first list binary search tree (133) of the look-up database (127), wherein each of the plurality of address ranges map to a corresponding plurality of locations in the first list (131); and
determine the first list position of the end-points in the plurality of locations in the first list (131) corresponding to the determined address range;
perform a predefined operation using the address of the end-points and the first list position to obtain an offset of the end-points;
determine an offset range to which the offset of the end-points belongs from a plurality of offset ranges stored in a second list binary search tree (139) of the look-up database (127), wherein each of the plurality of offset ranges map to a corresponding plurality of locations in the second list (137);
determine the second list position of the end-points in the plurality of locations in the second list corresponding to the determined offset range; and
retrieve the basic block information related to the end points using the second list position.

15. The processing system (123) as claimed in claim 9, wherein to determine the first list position and the second list position, the processor (303) is further configured to update in the key-information the first list position with location information of the end-point in the first list (131) and the second list position with location information of the basic block information of the end-point in the second list (137).

16. The processing system (123) as claimed in claim 9, wherein the processor (303) is further configured to:
indicate a display device associated with the processing system (123) to display the one or more frontier branches.
